# EUROPEAN PATENT SPECIFICATION

(11) **EP 3 540 534 B1**
(45) Date of publication and mention of the grant of the patent: **17.01.2024**
(21) Application number: 19162177.0
(22) Date of filing: 12.03.2019
(51) Int. Cl.: G05B 19/042, G05B 23/02, G05B 19/406

(54) **INFORMATION PROCESSING APPARATUS, METHOD AND COMPUTER READABLE MEDIUM**
INFORMATIONSVERARBEITUNGSVORRICHTUNG, INFORMATIONSVERARBEITUNGSVERFAHREN UND COMPUTERLESBARES MEDIUM
APPAREIL, PROCÉDÉ DE TRAITEMENT D'INFORMATIONS ET SUPPORT LISIBLE PAR ORDINATEUR

(30) Priority: 16.03.2018 JP 2018050224
(43) Date of publication of application: 18.09.2019
(73) Proprietor: Ricoh Company, Ltd., Tokyo 143-8555 (JP)
(72) Inventor: GOTO, Satoru, Tokyo, 143-8555 (JP)
(74) Representative: SSM Sandmair

(56) References cited:
- WO-A1-2017/111072
- WO-A2-2018/030422

## Description

### BACKGROUND

### Technical field

The present invention relates to an information processing apparatus, a system, an information processing method, and a carrier means.

### Discussion of the Background Art

There is a known method applied to detect an abnormality or the like of an apparatus that performs certain operation. This method detects a physical quantity such as information of a current value, vibration, force, or the like, of a motor of the apparatus and then spectrally displays the detected information (JP-2015-229216-A).

The technique described above, however, simply displays chatter estimation information at a certain time and a detected chatter spectrum, without achieving versatile evaluation.

WO 2018/030422 A2 discloses a diagnosis device including a first acquiring unit acquiring, from a target device, context information corresponding to a current operation; a second acquiring unit acquiring detection information output from a detecting unit that detects a physical quantity that changes according to operations performed by the target device; a first transmitting unit transmitting the acquired context information to a learning device; a second transmitting unit transmitting the acquired detection information to the learning device; a third acquiring unit acquiring a model corresponding to the transmitted context information, from the learning device that determines whether any pieces of context information are identical or similar to each other and combines models generated from pieces of the detection information corresponding to the pieces of identical or similar context information; and a first determining unit determining whether an operation performed by the target device is normal by using the detection information and the model.

### SUMMARY

The invention is set out in the appended independent claims. The dependent claims describe advantageous embodiments.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a functional block diagram illustrating an example of a general arrangement of a diagnosis system according to an embodiment (non-claimed);
FIG. 2 is a diagram illustrating an example of a hardware configuration of a machining device according to the embodiment (non-claimed).
FIG. 3 is a diagram illustrating an example of a hardware configuration of a diagnosis apparatus according to the embodiment (non-claimed);
FIGS. 4A and 4B are diagrams schematically illustrating characteristic information extracted from detected information by the diagnosis apparatus according to the embodiment (non-claimed) by using frequency components;
FIG. 5 is a diagram schematically illustrating detected information and characteristic information classified for each of machining stages by the diagnosis apparatus according to the embodiment (non-claimed);
FIG. 6 is a diagram schematically illustrating characteristic information consolidated for each of identical cycles by the diagnosis apparatus according to the embodiment (non-claimed);
FIG. 7 is a diagram illustrating an example of a history screen displayed by the diagnosis apparatus according to the embodiment (non-claimed);
FIG. 8 is a flowchart illustrating an example of a procedure of information processing of the diagnosis apparatus according to the embodiment (non-claimed);
FIG. 9 is a diagram illustrating an example of a history screen displayed by a diagnosis apparatus according to a first modification of the embodiment (according to the invention);
FIG. 10 is a flowchart illustrating an example of a procedure of information processing of the diagnosis apparatus according to the first modification of the embodiment (according to the invention);
FIG. 11 is a diagram illustrating an example of context information obtained by a diagnosis apparatus according to a third modification of the embodiment (non-claimed); and
FIG. 12 is a diagram illustrating a use example of information obtained from the diagnosis apparatus according to the third modification of the embodiment (non-claimed).

The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

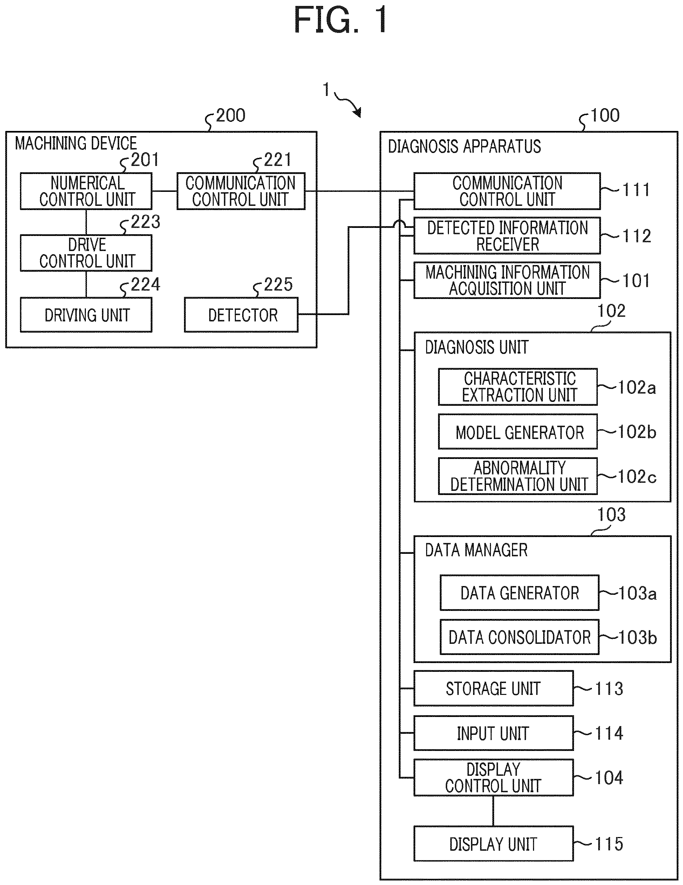

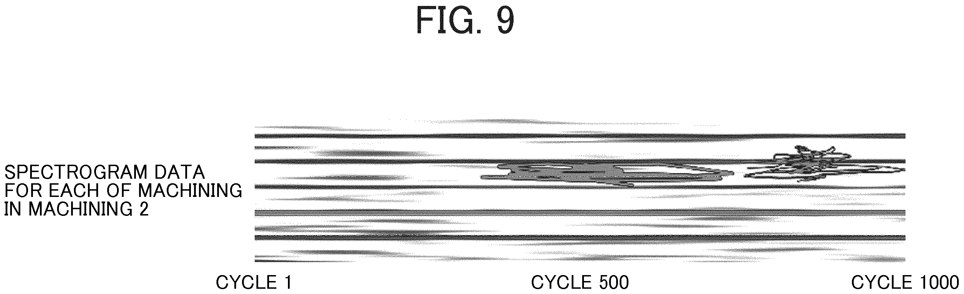

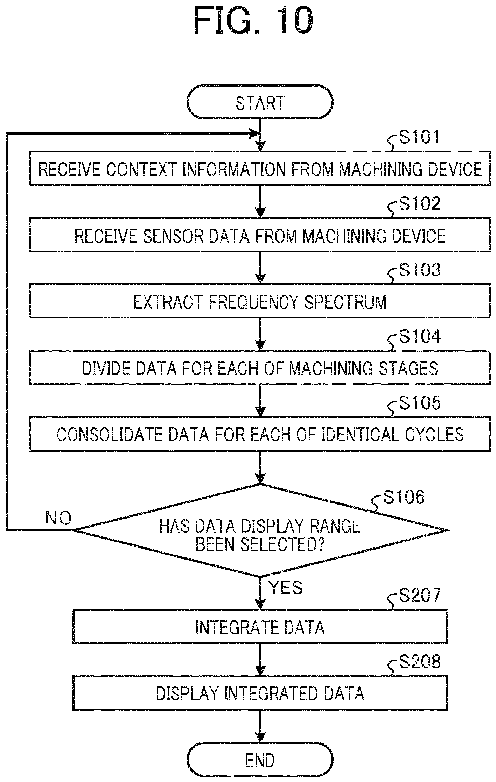

Hereinafter, an information processing apparatus, a system, an information processing method, and an information processing program according to embodiments will be described in detail with reference to FIGS. 1 to 12. FIGS. 1 to 8, 11 and 12 refer to non-claimed embodiments. FIGS. 9 and 10 refer to an embodiment according to the invention.

### (General arrangement of diagnosis system)

FIG. 1 is a functional block diagram illustrating an example of a general arrangement of a diagnosis system 1 according to an embodiment (non-claimed). The diagnosis system 1 includes: a diagnosis apparatus 100 as an information processing apparatus; and a machining device 200 as a target device. The diagnosis apparatus 100 includes: a detected information receiver 112 that obtains information regarding a physical quantity that changes according to the operation of the machining device 200; a characteristic extraction unit 102a as a characteristic information generator that generates characteristic information of the physical quantity information obtained by the detected information receiver 112; a storage unit 113 as a storage unit to store a plurality of pieces of characteristic information; and a display control unit 104 to display, on the display unit, certain characteristic information out of the plurality of pieces of characteristic information. Hereinafter, details of the diagnosis system 1 of the embodiment (non-claimed) will be described.

As illustrated in FIG. 1, the diagnosis system 1 according to the embodiment (non-claimed) includes: the machining device 200; and the diagnosis apparatus 100 to be connected to the machining device 200. The machining device 200 is a machine tool configured to perform machining such as cutting, grinding, polishing or the like on a machining target by using a tool. The machining device 200 is an example of a target device to be diagnosed by the diagnosis apparatus 100. The diagnosis apparatus 100 is communicably connected to the machining device 200, and performs abnormality diagnosis regarding operation of the machining device 200.

The machining device 200 as a target device (machine) includes a numerical control unit 201, a communication control unit 221, a drive control unit 223, a driving unit 224, and a detector 225.

The numerical control unit 201 controls the machining process performed by the driving unit 224 by numerical control (NC). For example, the numerical control unit 201 generates and outputs numerical control data for controlling operation of the driving unit 224. The numerical control unit 201 outputs, for example, a cutting feed signal being an on/off signal indicating a section (cutting feed section) from feeding operation onto a machining target of the tool up to the end of actual machining process, to the communication control unit 221, as machining information as context information indicating the operation state of the driving unit 224 that drives the tool. The context information is a plurality of pieces of information determined for each of operation types of the machining device 200. In addition to the cutting feed signal, the context information may include, for example, identification information of the machining device 200, identification information of the driving unit 224 (for example, tool identification information, etc.), a diameter of a tool driven by the driving unit 224, configuration information of material of the tool, or the like, and information indicating the operating state of the driving unit 224, the cumulative operating time from the start of use of the driving unit 224, the load applied to the driving unit 224, the number of revolutions of the driving unit 224, machining conditions such as the machining speed of the driving unit 224, etc.

The numerical control unit 201 sequentially transmits the context information corresponding to the current operation of the machining device 200 to the diagnosis apparatus 100 via the communication control unit 221, for example. When machining a machining target, the numerical control unit 201 changes the type of the driving unit 224 to drive or the driving state (number of revolutions, rotational speed, etc.) of the driving unit 224 in accordance with machining stages. At each of times of the operation type change, the numerical control unit 201 sequentially transmits the context information corresponding to the changed operation type to the diagnosis apparatus 100 via the communication control unit 221.

The communication control unit 221 controls communication with an external device such as the diagnosis apparatus 100. The communication control unit 221 transmits the context information corresponding to the current operation to the diagnosis apparatus 100, for example.

The drive control unit 223 controls the driving of the driving unit 224 on the basis of the numerical control data obtained by the numerical control unit 201.

The driving unit 224 is a target of drive control performed by the drive control unit 223. The driving unit 224 drives the tool under the control of the drive control unit 223. The driving unit 224 is an actuator (motor) or the like subjected to the driving control of the drive control unit 223. The driving unit 224 may be implemented by any type of actuator as long as it is used for machining and is subject to numerical control. The number of the driving units 224 may be two or more.

The detector 225 detects the physical quantity generated by the machining device 200, and outputs information including the detected physical quantity to the diagnosis apparatus 100 as detected information (sensor data). The physical quantity generated by the machining device 200 is vibration, sound, or the like generated by the machining device 200. Such vibration, sound, or the like is generated, for example, by a contact between a tool installed in the machining device 200 and a machining target during machining operation. Alternatively, such vibration or sound or the like might be emitted by the tool or the machining device 200 itself. The number of detectors 225 may be any number. For example, a plurality of detectors 225 for detecting an identical physical quantity may be provided, or a plurality of detectors 225 for detecting mutually different physical quantities may be provided. For example, an occurrence of breakage or chipping of a blade being a tool used for machining would change vibrations and sounds during machining. Accordingly, abnormality in the operation of the machining device 200 can be detected by detecting vibration data and acoustic data by using the detector 225 and making a judgment using a model or the like for judging normal vibration and sound or the like.

The diagnosis apparatus 100 as an information processing apparatus includes a communication control unit 111, a detected information receiver 112, a machining information acquisition unit 101, a diagnosis unit 102, a data manager 103, a storage unit 113, an input unit 114, a display control unit 104, and a display unit 115.

The communication control unit 111 controls communication with the machining device 200. For example, the communication control unit 111 receives context information from the numerical control unit 201 of the machining device 200 via the communication control unit 221.

The detected information receiver 112 receives detected information (physical quantity information) from the detector 225 installed in the machining device 200.

The machining information acquisition unit 101 obtains the context information (machining information) that the communication control unit 111 has received from the machining device 200.

The diagnosis unit 102 includes a characteristic extraction unit 102a, a model generator 102b, and an abnormality determination unit 102c, and determines an abnormality or the like of the operation of the machining device 200.

The characteristic extraction unit 102a as the characteristic information generator extracts, from the detected information, characteristic information used for determination or the like to be performed by the abnormality determination unit 102c. The characteristic information may be any type of information as long as the information indicates the characteristic of the detected information.

The model generator 102b generates a model to be used for determining that the machining has been performed normally. The model is generated for each of pieces of context information, for example. When a model is generated by an external device, the model generator 102b can be omitted.

The abnormality determination unit 102c determines whether the operation of the machining device 200 is normal by using the characteristic information extracted by the characteristic extraction unit 102a and the model for each of pieces of context information generated by the model generator 102b.

The data manager 103 as the context information generator includes a data generator 103a and a data consolidator 103b, and processes and manages detected information, context information, characteristic information, or the like.

The data generator 103a calculates, as an example, a cutting feed section for each of machining stages in the machining device 200 from the context information. In addition, the data generator 103a classifies the detected information obtained by the detected information receiver 112 and the characteristic information extracted by the characteristic extraction unit 102a for each of machining stages.

The data consolidator 103b consolidates the data generated by the data generator 103a as time-series data.

The storage unit 113 as a storage unit stores the detected information obtained by the detected information receiver 112 in association with the context information. The storage unit 113 further stores the characteristic information extracted by the characteristic extraction unit 102a in association with the context information. The storage unit 113 further stores the model generated by the model generator 102b in association with the context information.

The input unit 114 performs operation such as input of letters, numbers and the like, selection of various instructions, and movement of a cursor.

The display control unit 104 controls display operation of the display unit 115. Specifically, the display control unit 104 controls the display unit 115 to display a result of abnormality determination made by the abnormality determination unit 102c or the like. The display control unit 104 further controls the display unit 115 to display time-series data or the like consolidated by the data consolidator 103b. The display unit 115 displays various types of information under the control of the display control unit 104.

Note that the functional units of the diagnosis apparatus 100 and the machining device 200 are conceptual representations of the functions, and the present invention is not limited to such a configuration. For example, a plurality of functional units illustrated as independent functional units in FIG. 1 may be configured as one functional unit. In addition, the function of one functional unit in FIG. 1 may be divided into a plurality of functional units.

Meanwhile, the machining device 200 and the diagnosis apparatus 100 may be connected in any form of connection. For example, the machining device 200 and the diagnosis apparatus 100 may be connected via a dedicated connection line, a fifth generation mobile communication system, a wired network such as a wired local area network (LAN), or a wireless network, etc.

While FIG. 1 illustrates an example in which one machining device 200 is connected to the diagnosis apparatus 100, the present invention is not limited to this connection example, and a plurality of machining devices 200 may be mutually communicably connected to the diagnosis apparatus 100.

### (Hardware configuration of machining device)

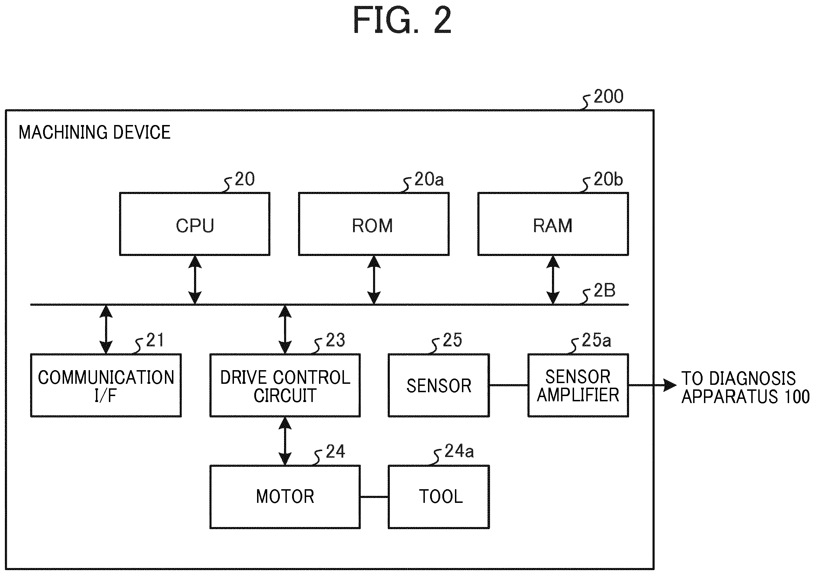

Next, an example of a hardware configuration of the machining device 200 according to the embodiment (non-claimed) will be described with reference to FIG. 2. FIG. 2 is a diagram illustrating an example of a hardware configuration of the machining device 200 according to the embodiment (non-claimed).

As illustrated in FIG. 2, the machining device 200 has a configuration including a central processing unit (CPU) 20, a read only memory (ROM) 20a, a random access memory (RAM) 20b, a communication interface (I/F) 21, and a drive control circuit 23, being communicably connected to each other via a bus 2B.

The CPU 20 is an arithmetic device that controls the entire machining device 200. The CPU 20 executes a program stored in the ROM 20a or the like with the RAM 20b as a work area (work region), for example, thereby controlling the operation of the entire machining device 200, leading to execution of the machining function. The numerical control unit 201 in FIG. 1 is implemented by a program operative on the CPU 20, for example.

The communication I/F 21 is an interface used for communication with an external device such as the diagnosis apparatus 100. The communication I/F 21 is, for example, a network interface card (NIC) corresponding to Transmission Control Protocol (TCP)/Internet Protocol (IP) or the like. The communication control unit 221 in FIG. 1 is implemented by, for example, a communication I/F 21 and a program operative on the CPU 20.

The drive control circuit 23 is a circuit that controls the drive of a motor 24. The motor 24 drives a tool 24a used for machining. The tool 24a includes a drill, an end mill, a cutting tip, a grinding stone or the like, and a table on which the machining target is mounted and moved in accordance with machining procedures. The drive control unit 223 in FIG. 1 is implemented by the drive control circuit 23, for example. The driving unit 224 in FIG. 1 is implemented by the motor 24, for example.

A sensor 25 is constituted by a microphone device, a vibration sensor, an acceleration sensor, an acoustic emission (AE) sensor, or the like, and is installed in the vicinity of a tool that can detect vibration, sound, or the like. A sensor amplifier 25a to which the sensor 25 is connected is communicably connected to the diagnosis apparatus 100. The sensor 25 and the sensor amplifier 25a may be preliminarily provided in the machining device 200 or may be attached later to the machining device 200 which is a finished machine. In addition, installation location of the sensor amplifier 25a is not limited to the machining device 200, and may be installed on the diagnosis apparatus 100 side. The detector 225 in FIG. 1 is implemented by the sensor 25 and the sensor amplifier 25a, for example.

The hardware configuration illustrated in FIG. 2 is just an example, and the machining device 200 does not need to have all the constituent devices, and may have other constituent devices. For example, the numerical control unit 201 and the communication control unit 221 illustrated in FIG. 1 may be implemented by causing the CPU 20 illustrated in FIG. 2 to execute a program, that is, implemented by software, or implemented by hardware such as an integrated circuit (IC). Alternatively, these controllers may be implemented by using software and hardware in combination.

### (Hardware configuration of diagnosis apparatus)

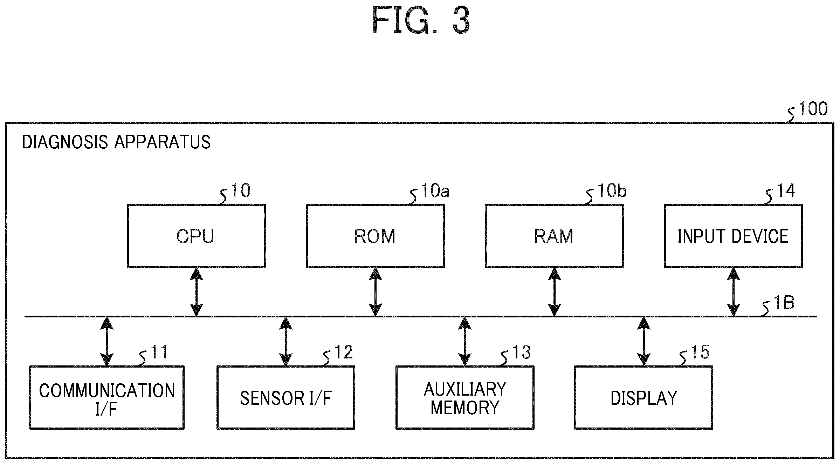

Next, a hardware configuration example of the diagnosis apparatus 100 according to the embodiment (non-claimed) will be described with reference to FIG. 3. FIG. 3 is a diagram illustrating an example of the hardware configuration of the diagnosis apparatus 100 according to the embodiment (non-claimed).

As illustrated in FIG. 3, the diagnosis apparatus 100 has a configuration including a CPU 10, a ROM 10a, a RAM 10b, a communication I/F 11, a sensor I/F 12, an auxiliary memory 13, an input device 14, and a display 15 being communicably connected to each other via a bus 1B.

The CPU 10 is an arithmetic device that controls the entire diagnosis apparatus 100. The CPU 10 executes programs stored in the ROM 10a or the like with the RAM 10b as a work area (work region), for example, thereby controlling the overall operation of the diagnosis apparatus 100, leading to implementation of a diagnostic function. The machining information acquisition unit 101, the diagnosis unit 102, the data manager 103, and the display control unit 104 in FIG. 1 are implemented by a program operative on the CPU 10, for example.

The communication I/F 11 is an interface used for communication with an external device such as the machining device 200. An example of the communication I/F 11 includes a NIC compatible with TCP/IP. The communication control unit 111 illustrated in FIG. 1 is implemented by a communication I/F 11 illustrated in FIG. 3 and a program operative on the CPU 10.

The sensor I/F 12 is an interface that receives, via the sensor amplifier 25a, detected information from the sensor 25 installed in the machining device 200. The detected information receiver 112 in FIG. 1 is implemented by the sensor I/F 12 and a program operative on the CPU 10, for example.

Examples of the auxiliary memory 13 include a non-volatile memory devices such as a hard disk drive (HDD), an solid state drive (SSD), or electrically erasable programmable read-only memory (EEPROM), to store various types of data including setting information of the diagnosis apparatus 100, detected information and context information received from the machining device 200, an operating system (OS), and application programs. While the auxiliary memory 13 is assumed to be provided in the diagnosis apparatus 100, the installation location is not limited to this. The auxiliary memory 13 may be implemented as a memory device installed outside the diagnosis apparatus 100, or as a memory device provided in a cloud type or an on-premises type server device capable of performing data communication with the diagnosis apparatus 100. The storage unit 113 in FIG. 1 is implemented by the RAM 10b and the auxiliary memory 13, for example.

The input device 14 is an input device such as a mouse or a keyboard to perform operation such as inputting letters and numbers, selecting various instructions, and moving a cursor. The input unit 114 in FIG. 1 is implemented by the input device 14, for example.

The display 15 is a display device such as a cathode ray tube (CRT) display, a liquid crystal display (LCD), or an organic Electro-Luminescence (EL) display, to display characters, numerals, various screens and operation icons, or the like. The display 15 may have an independent configuration or may be incorporated in a tablet, a personal computer (PC), or the like. The display unit 115 in FIG. 1 is implemented by the display 15, for example.

The hardware configuration illustrated in FIG. 3 is just an example, and the diagnosis apparatus 100 does not need to have all the constituent devices, and may have other constituent devices. For example, the functional units (the machining information acquisition unit 101, the diagnosis unit 102, the data manager 103, and the display control unit 104) of the diagnosis apparatus 100 illustrated in FIG. 1 can cause the CPU 10 to execute a program, that is, may be implemented by software, may be implemented by hardware such as an IC or may be implemented by using software and hardware in combination. Furthermore, in a case where the diagnosis apparatus 100 is specialized for diagnostic operation of the machining device 200 and transmits the diagnostic result to an external server device or the like, the input device 14 and the display 15 may be omitted from the configuration.

### (Operation example of data manager)

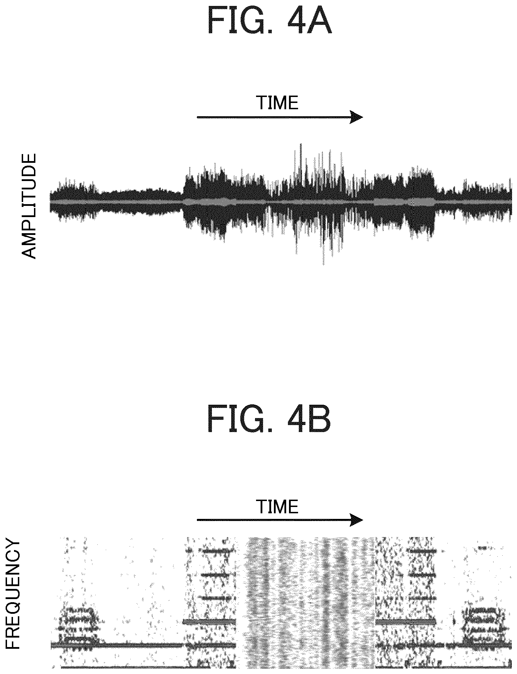

Next, an operation example of the data manager 103 will be described with reference to FIGS. 4 to 7.

In the case of manufacturing a plurality of predetermined processed products, for example, the machining device 200 repeats execution of a cycle including a plurality of machining stages. At this time, the diagnosis apparatus 100 obtains sensor data (detected information) such as vibrations and sounds in the machining device 200 together with context information such as a cutting feed signal. The characteristic extraction unit 102a of the diagnosis unit 102 extracts, from detected information, characteristic information indicating a characteristic of the detected information. The data generator 103a of the data manager 103 discriminates the machining stage from the cutting feed signal and classifies the characteristic information for each of the machining stages.

FIGS. 4A and 4B are diagrams schematically illustrating, by using frequency components, characteristic information extracted from detected information by the diagnosis apparatus 100 according to the embodiment (non-claimed). As illustrated in FIG. 4A, frequency data such as vibration and sound is obtained as detected information from detector 225 such as a vibration sensor and a microphone device. For example, in a case where the detected information is frequency data collected by a vibration sensor or a microphone device, the characteristic extraction unit 102a extracts energy, a frequency spectrum, Mel-frequency cepstrum coefficient (MFCC), or the like, as characteristic information.

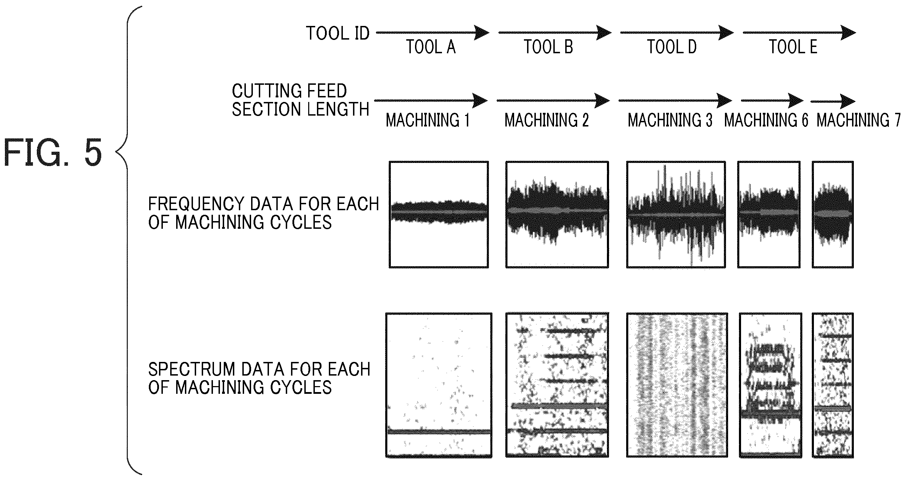

As illustrated in FIG. 4B, in a case where the characteristic information to be extracted is a frequency spectrum, the characteristic extraction unit 102a, for example, applies Fourier transform on the detected information for each of frames to extract the characteristic information. Here, the frame indicates the data amount of the detected information for a predetermined time period (for example, 20 [ms], 40 [ms], etc.) and this corresponds to the data amount of the window length in a case where the characteristic information is the frequency spectrum to be obtained by application of Fourier transform on the detected information, for example. The characteristic information illustrated in FIG. 5 is associated with the frame time of the corresponding detected information.

FIG. 5 is a diagram schematically illustrating detected information and characteristic information classified for each of machining stages by the diagnosis apparatus 100 according to the embodiment (non-claimed). As illustrated in FIG. 5, the data generator 103a identifies one cutting feed section in the machining device 200 as one machining stage from the cutting feed signal included in the context information, and calculates the section length of each of the machining stages. It is possible to identify the type of tool that has been used for machining from the tool identification information (tool ID), for example. In addition, operation number information may be assigned to the management of the engineering stage in the machining stages, in accordance with the purpose. In the example of FIG. 5, tool A is used in the machining of the operation number information 1 (machining 1), and tool E is used in the machining of the operation number information 6 and 7 (machining 6 and 7). From the cycle information included in the context information, for example, it can be identified that machining 1 to 3, 6 and 7 are included in one cycle. In this manner, the characteristic information classified for each of the machining stages is stored in the storage unit 113 in association with the corresponding context information. These pieces of stored information can be read and displayed as appropriate by the display control unit 104. At this time, the user can select and display a part or whole of the information according to FIG. 5, such as frequency, spectrum, or a machining stage.

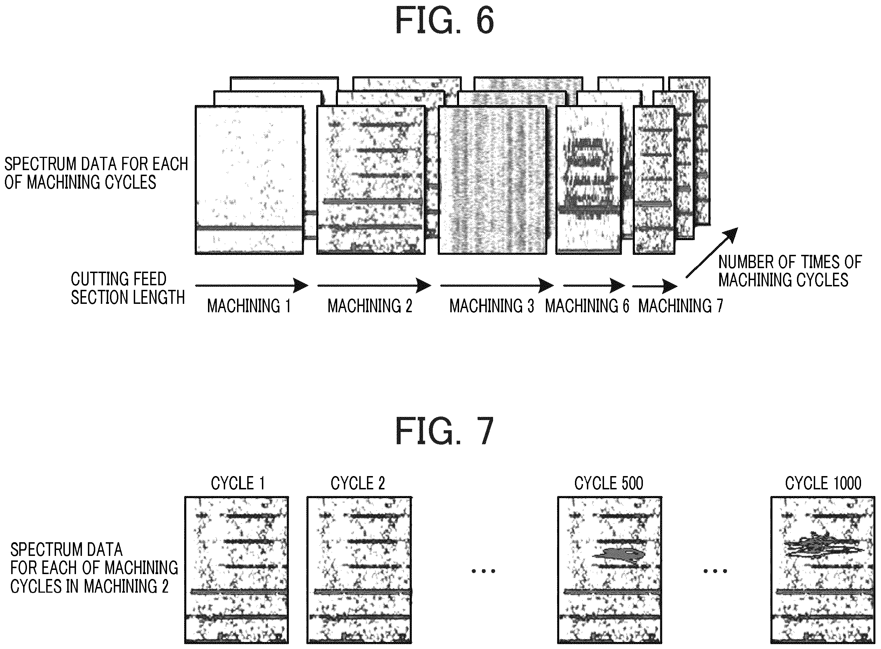

FIG. 6 is a diagram schematically illustrating characteristic information consolidated for each of identical cycles by the diagnosis apparatus 100 according to the embodiment (non-claimed). As illustrated in FIG. 6, the data consolidator 103b consolidates the data generated by the data generator 103a, for example, as time-series data for each of identical machining stages within the identical cycle. In cycles including machining 1 to 3, 6, and 7, as illustrated in the example of FIG. 6, characteristic information for a plurality of cycles is consolidated for machining 1, 2, 3, 6, and 7 being identical machining stages. The time-series data consolidated in this manner is stored in the storage unit 113 in association with the corresponding context information. These pieces of stored information can be read and displayed as appropriate by the display control unit 104. At that time, the user can select a certain cycle No. and the number of cycles, and then display information corresponding to these selections.

FIG. 7 is a diagram illustrating an example of a history screen displayed by the diagnosis apparatus 100 according to the embodiment (non-claimed). As illustrated in FIG. 7, the display control unit 104 displays data consolidated by the data consolidator 103b in accordance with instructions from a user of the diagnosis apparatus 100, for example, so as to be displayed in parallel for each of the identical machining stages within the identical cycle, for example. In the example of FIG. 7, time-series data in cycles 1 to 1000 of the machining stage of machining 2 are displayed in parallel in cycles including machining 1 to 3, 6 and 7.

The user can designate the operation number information indicating the machining stage, the number of the cycles to be displayed, etc., in displaying such a history screen. From these data, the user can obtain various types of information. For example, in the example of FIG. 7, middle and high frequency components not being observed at the beginning of the cycle appear in higher intensity on and after cycle 500. This suggests an occurrence of abnormal phenomenon.

### (Example of information processing of diagnosis apparatus)

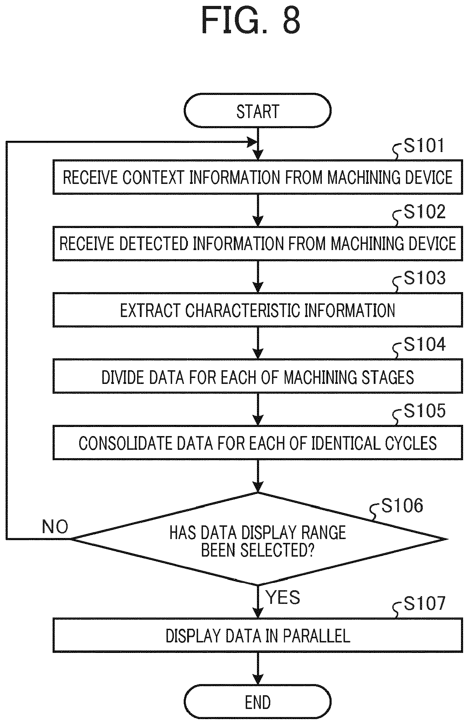

Next, an example of information processing to be performed by the diagnosis apparatus 100 will be described with reference to FIG. 8. FIG. 8 is a flowchart illustrating an example of the information processing procedure performed by the diagnosis apparatus 100 according to the embodiment (non-claimed).

As illustrated in FIG. 8, the machining information acquisition unit 101 obtains, in step S101, context information from the machining device 200. In step S102, the detected information receiver 112 receives the detected information from the detector 225.

In step S103, the characteristic extraction unit 102a extracts characteristic information from the received detected information.

In step S104, the data generator 103a identifies the machining stage from the obtained context information and calculates the section length of each of machining stages. Furthermore, the data generator 103a divides the characteristic information for each of machining stages. In step S105, the data consolidator 103b consolidates the data as time-series data for each of the identical machining stages within the identical cycle.

In step S106, the data manager 103 determines whether the data display range or the like has been selected by the user in order to display the time-series data. In a case where there has been no instruction to display data from the user (No), the processing returns to step S101 to continue data collection.

When there has been an instruction to display data from the user (Yes), the display control unit 104 displays in step S107 the time-series data of the selected display range in parallel on the display unit 115.

This completes the information processing to be performed by the diagnosis apparatus 100.

For example, JP-2006-123013-A describes a machine tool that detects wear of a tool by an image photographed by a camera provided in the vicinity of the tool of the machine. The machine tool that performs cutting or the like, however, performs machining while spraying a coolant as a lubricant or refrigerant near the tool. This would make it extremely difficult to directly detect wear or the like of the tool by the camera or the like, and difficult to avoid the use of indirect detection of an abnormality using a physical quantity such as a vibration generated in the machine tool.

Meanwhile, for example, in the vibration detector disclosed in JP-2015-229216-A, chatter is detected by a disturbance observer that estimates a disturbance on the basis of the rotation amount and the torque of the motor in order to grasp the vibration of the cutting process. However, the disclosed vibration detector merely displays the chatter estimation information and the detected chatter spectrum. This information would not be enough for grasping machine tool information, leading to difficulty in performing versatile and sufficient evaluation.

In the diagnosis apparatus 100 according to the embodiment (non-claimed), data processed by the data generator 103a and consolidated by the data consolidator 103b is accumulated in the storage unit 113, and is displayed as time-series data by the display control unit 104. This allows the user to display and compare pieces of data having different cycles with each other. Abrasion, minute chipping or the like occurring in the tool often causes very minute changes in the detected information and the characteristic information. For example, displaying the characteristic information as time-series data makes it possible for the user to detect such a very minute change. This enables the user to grasp gradual aging in the machining device 200 and to notice, at an early stage, a minute change leading to future abnormality or failure in the machining device 200.

### (First Modification)

Next, a diagnosis apparatus according to a first modification of an embodiment according to the invention will be described with reference to FIGS. 9 and 10. The diagnosis apparatus according to the first modification of the embodiment according to the invention is different from the above-described embodiments (non-claimed) in that the data consolidator integrates time-series data into one graph when displaying the history screen.

FIG. 9 is a diagram illustrating an example of a history screen displayed by the diagnosis apparatus according to the first modification of the embodiment according to the invention. As illustrated in FIG. 9, in the diagnosis apparatus according to the first modification of the embodiment according to the invention, the data consolidator compresses and integrates the time-series data into one graph in response to the user's instruction of displaying the history screen. That is, the display width of individual data is compressed to be integrated into one graph. In the example of FIG. 9, pieces of time-series data of cycles 1 to 1000 are integrated into one graph by averaging and compressing the data for each of cycles in the time direction. In this manner, the user can compress (to total) data of different cycles and selectively display the data.

FIG. 10 is a flowchart illustrating an example of a procedure of information processing of the diagnosis apparatus according to the first modification of the embodiment according to the invention. As illustrated in FIG. 10, steps S101 to S106 are performed in a procedure similar to steps S101 to S106 of FIG. 8 for the diagnosis apparatus 100 of the embodiment (non-claimed).

When an instruction to display data by the user is given (Yes) in step S106, the data consolidator integrates in step S207 the data in the designated range by the user. In step S208, the display control unit 104 controls the display unit 115 to collectively display the integrated data.

This completes the information processing performed by the diagnosis apparatus of the first modification of the embodiment according to the invention.

Integration of the data in this manner makes it possible to collectively display a larger amount of data on one graph. That is, since more information can be displayed collectively, the user can grasp the state of the machining device on the basis of more abundant information.

### (Second modification)

While the display control unit 104 of the diagnosis apparatus 100 displays various types of data on the display unit 115 in the embodiment (non-claimed) described above, the data output method is not limited to this method. Various types of data may be printed out to a printer or the like connected to the diagnosis apparatus 100. In such case, the display control unit 104 is replaced by a print control unit that controls printing. The display unit 115 is replaced by a print unit 115 that communicates with the diagnosis apparatus 100 via a network such as a LAN. Alternatively, it is possible to adopt data output methods such as outputting by the sound from a speaker, by the lighting of the lamp, or the like. That is, the display control unit 104 and the display unit 115 may be generally referred to as an output control unit 104 configured to control output of information, and an output unit 115 configured to output information.

While the above-described embodiment (non-claimed) defined the detected information as vibration data or acoustic data, for example, the detected information may be other data such as a current value, a load, a torque, a force, a temperature, a distance between a part such as a tool and the measurement object, or an image. These pieces of detected information (physical quantity) are obtained from, for example, a machining tool, a bearing, a motor, a pump (compressor), a machining target, and a holding member (holder) for the machining target or a tool.

While the above embodiment (non-claimed) defines the diagnosis target device as the machining device 200, the diagnosis target device may be a machine such as a lathe machine, an assembling machine, a measuring machine, an inspecting machine, a washing machine, or the like.

Note that the programs executed by the diagnosis system of the embodiment (non-claimed) and each of the modifications described above may be configured to be preliminarily incorporated in a ROM or the like to be provided.

Programs executed by the diagnosis system of the embodiment (non-claimed) and each of the modifications described above may be recorded in a computer-readable recording medium such as a compact disc read only memory (CD-ROM), a flexible disk (FD), a compact disk-recordable (CD-R), and a digital versatile disk (DVD) in the installable or executable file format and may be provided as a computer program product.

In addition, the programs executed by the diagnosis systems of the above-described embodiments (non-claimed) and modifications may be stored on a computer connected to a network such as the Internet and may be downloaded via the network to be provided. In addition, the program executed by the diagnosis system of the above-described embodiment (non-claimed) and each of the modifications may be provided or distributed via a network such as the Internet.

In addition, each of the programs executed by the diagnosis systems of the above-described embodiments (non-claimed) and each of the modifications is configured as a module including each of the functional units described above. In practice, the CPU (processor) as hardware reads and executes the program in the ROM to load the individual functional units described above onto main memory to generate the individual functional unit on the main memory.

### (Third modification)

In the embodiment (non-claimed) described above, the diagnosis apparatus 100 mainly use the cutting feed signal out of context data to perform various types of data processing. The present invention, however, is not limited to this. As described above, various types of information can be included in the context information, and these pieces of obtained information can be utilized in various manners.

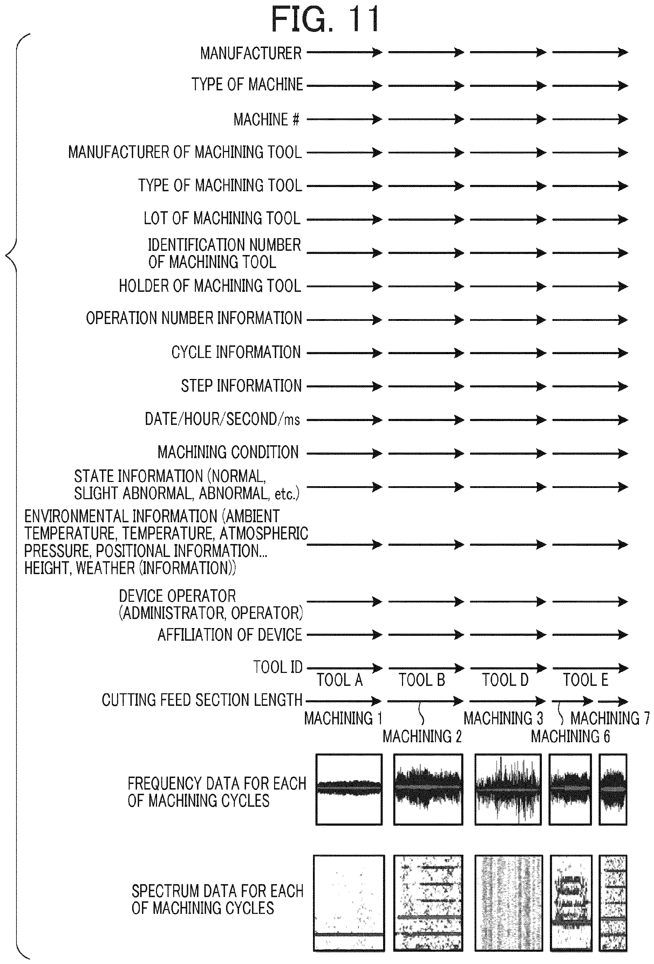

FIG. 11 is a diagram illustrating an example of context information obtained by a diagnosis apparatus according to a third modification of the embodiment (non-claimed). Specifically, the context information may include information concerning the machine tool, etc. such as the manufacturer of the machine tool, machine types of the lathe machine, machining device, or the like, and machine serial number, etc. In addition, the context information may include information concerning parts attached to a machine tool or the like, such as the manufacturer and type of machining tool, lot number, identification number, holder, and tool ID. The context information may further include information concerning operation number information, cycle information, step information, machining conditions, or the like. The context information may further include information indicating a status of the machine tool, such as date, hour, second, ms, status information, environmental information, etc. The context information may further include information concerning a machine operator, affiliation, or the like.

These pieces of context information are selectively displayed together with detected information, characteristic information, or the like obtained from a target device such as a machining device, for example. That is, the user can select and display desired information out of various types of context information. In addition, capability of designating certain information from various types of context information makes it useful for selecting and displaying desired data from among a large amount of data. It is also possible to enable selection as to which of the various types of context information to record. In this manner, performing acquisition and consolidation of various types of context information together with detected information indicating states of the machine tool, etc. leads to acquisition of more comprehensive information.

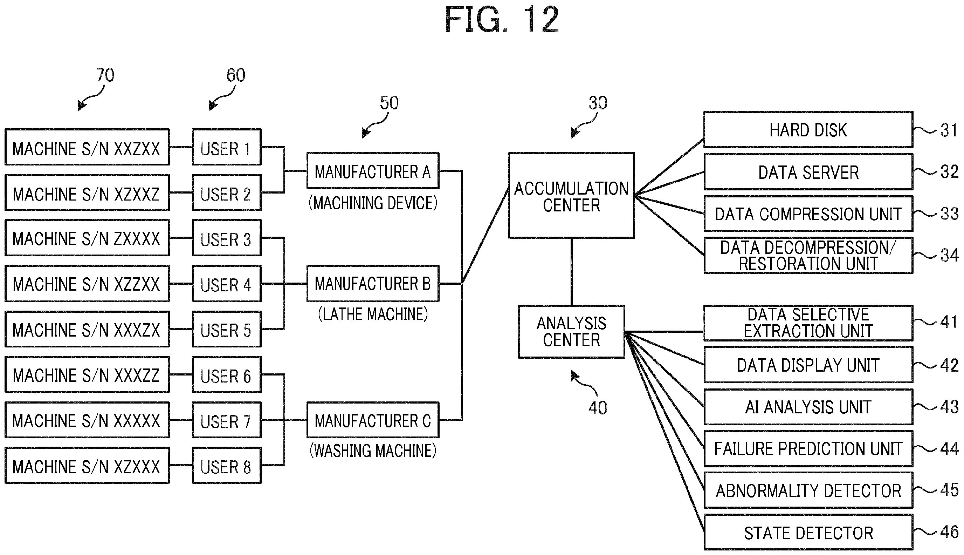

FIG. 12 is a diagram illustrating a use example of information obtained from the diagnosis apparatus according to the third modification of the embodiment (non-claimed). As illustrated in FIG. 12, it is possible to integrate, onto an accumulation center 30, various types of information concerning machines 70 possessed by users 60, such as a machining device, a lathe machine, a washing machine, or the like, individually provided by a plurality of manufacturers 50. These users 60 may be factories or the like in one company or may be a plurality of companies etc. working in cooperation.

The accumulation center 30 includes a hard disk 31 and a data server 32 (may be either the on-premises type or cloud type) and includes functional units such as a data compression unit 33 and a data decompression/restoration unit 34. Such data compression and decompression functions are useful for accumulating huge amounts of data. The accumulation center 30 is provided with an analysis center 40 for analyzing accumulated data, for example. For the purpose of data analysis, the analysis center 40 includes at least one, some, or all of functional units including a data selective extraction unit 41, a data display unit 42, an AI analysis unit 43, a failure prediction unit 44, an abnormality detector 45, and a state detector 46.

These accumulation centers 30 and analysis centers 40 may be operated by one company that owns machines from a plurality of manufacturers 50 and used at individual user sites 60. Alternatively, the accumulation center 30 and the analysis center 40 may be operated by the users 60, the manufacturers 50, etc. working in cooperation.

### (Fourth modification)

While the above embodiment (non-claimed) uses the diagnosis target device as the machining device 200 or another machine tool as an example, the machine as a diagnosis target is not limited to this example. With various types of information obtained from the machinery used in the factory or from turbines, etc. in a power plant, it is possible to make the whole facility a diagnosis target. As context information at this time may be time information, position information by a global positioning system (GPS), or the like in addition to the above-described various types of information. With the use of time information, position information or the like, it is possible to facilitate comparison of time zones on individual machining cycles and comparison on the sites of machining devices, for example.

Furthermore, the diagnosis target machine may be a moving object such as an automobile, an aircraft, or a rocket. For example, details will be described below by using an automobile as an example.

In a case where the diagnosis target is an automobile, the context information indicating the section repeated by the apparatus includes time information, position information obtained by GPS, for example. Alternatively, the context information may be a signal issued at a timing when the state of the automobile changes, such as a signal indicating foot pedal operation and a signal indicating a gear change. Examples of the physical quantity (detected information) that changes with the operation of the apparatus include the accelerator depression amount and energy consumption. Some examples of using these pieces of information are illustrated below.

For example, observation of the energy consumption per unit time (seconds, hours, days, months) as time-series data according to time information would make it easy to grasp the state and time-dependent change of the automobile in the daily cycle.

Furthermore, observation of the information of the height difference based on an acceleration sensor or map information and the accelerator depression amount in comparison with each other in addition to the GPS position information, for example, would make it easy to notice an abnormality such as excessive accelerator depression amount at a downhill, for example.

Furthermore, for example, acquisition of a predicted value of energy consumption by calculation from information of height difference based on acceleration sensor or map information in addition to GPS position information and performing comparison of the predicted value with actual energy consumption would lead to early discovery of a certain abnormality.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information processing apparatus (100) comprising:
a detected information receiver (112) configured to obtain physical quantity information indicating a physical quantity that occurs in a target device (200) and changes in accordance with operation of the target device;
a characteristic information generator (102a) configured to generate characteristic information indicating a characteristic of the physical quantity information;
a data manager (103) configured to classify the characteristic information into a plurality of stages contained in one cycle, so as to generate a plurality of pieces of characteristic information for each cycle, the cycle being a cycle including the plurality of stages and to be repeatedly executed by the target device;
a storage unit (113) configured to store the plurality of pieces of characteristic information for each cycle; and
an output control unit (104) configured to output one or more pieces of the plurality of pieces of characteristic information for a plurality of cycles, the cycles being executed at different points in time, to an output unit (115),
**characterized in that**
the data manager (103) is configured to consolidate the plurality of pieces of characteristic information, for each stage, as a plurality of pieces of time-series data for the plurality of cycles into one graph by averaging and compressing the plurality of pieces of time-series data for each of the cycles in the time direction, and
the output control unit (104) is configured to integrally output the plurality of pieces of time-series data for the plurality of cycles in a plurality of stages.

2. The information processing apparatus (100) according to claim 1, further comprising a communication control unit (111) configured to receive context information related to the operation of the target device,
wherein the storage unit (113) is configured to store the plurality of pieces of characteristic information in association with the context information.

3. The information processing apparatus (100) according to claim 2, wherein the output control unit (104) is configured to selectively output the context information on the output unit (115).

4. The information processing apparatus (100) according to claim 2 or 3, further comprising:
the output unit (115) configured to output information under control of the output control unit (104), the output unit (115) being a display.

5. A system (1) comprising:
the information processing apparatus (100) according to claim 1 or 2; and
a target device (200) to be diagnosed by the information processing apparatus, including:
a detector (225) configured to detect the physical quantity of the target device (200), and is configured to output information including the physical quantity to the information processing apparatus (100).

6. The system (1) of claim 5,
wherein the target device (200) is a machining device that is configured to perform machining on a machining target.

7. The system (1) of claim 5, further comprising:
the output unit (115) configured to output information under control of the output control unit (104), the output unit (115) being a printer.

8. An information processing method to be executed by an information processing apparatus (100) configured to diagnose a target device (200), the method comprising:
obtaining (S102) physical quantity information indicating a physical quantity that occurs in the target device and changes in accordance with operation of the target device;
generating (S103) characteristic information indicating a characteristic of the physical quantity information;
classifying (S104) the characteristic information into a plurality of stages contained in one cycle, so as to generate a plurality of pieces of characteristic information for each cycle, the cycle being a cycle including the plurality of stages and to be repeatedly executed by the target device;
storing the plurality of pieces of characteristic information for each cycle; and
outputting (S107) one or more pieces of the plurality of pieces of characteristic information for a plurality of cycles, the cycles being executed at different points in time, to an output unit (115),
**characterized by**
consolidating the plurality of pieces of characteristic information, for each stage, as a plurality of pieces of time-series data for the plurality of cycles into one graph by averaging and compressing the plurality of pieces of time-series data for each of the cycles in the time direction, wherein
the outputting comprises integrally outputting the plurality of pieces of time-series data for the plurality of cycles in a plurality of stages.

9. A computer readable medium storing program code that when executed by the information processing apparatus of claim 1, causes said apparatus to carry out the method of claim 8.

## Patentansprüche

1. Informationsverarbeitungsvorrichtung (100), umfassend:
einen Empfänger (112) für erfasste Informationen, der so konfiguriert ist, dass er Informationen über physikalische Größen erhält, die eine physikalische Größe angeben, die in einem Zielgerät (200) auftritt und sich in Übereinstimmung mit dem Betrieb des Zielgeräts ändert;
einen Generator (102a) für charakteristische Informationen (102a), der so konfiguriert ist, dass er charakteristische Informationen erzeugt, die ein Merkmal der Informationen über physikalische Größen angeben;
einen Datenmanager (103), der so konfiguriert ist, dass er die charakteristischen Informationen in eine Vielzahl von Stufen klassifiziert, die in einem Zyklus enthalten sind, um so eine Vielzahl von Teilen charakteristischer Informationen für jeden Zyklus zu erzeugen, wobei der Zyklus ein Zyklus ist, der die Vielzahl von Stufen enthält und wiederholt von dem Zielgerät ausgeführt werden soll;
eine Speichereinheit (113), die so konfiguriert ist, dass sie die Vielzahl von charakteristischen Informationen für jeden Zyklus speichert; und
eine Ausgabesteuereinheit (104), die so konfiguriert ist, dass sie einen oder mehrere Teile der Vielzahl von Teilen der charakteristischen Informationen für eine Vielzahl von Zyklen an eine Ausgabeeinheit (115) ausgibt, wobei die Zyklen zu verschiedenen Zeitpunkten ausgeführt werden,
**dadurch gekennzeichnet, dass**
der Datenmanager (103) so konfiguriert ist, dass er die Vielzahl von Teilen charakteristischer Informationen für jede Stufe als eine Vielzahl von Teilen von Zeitseriendaten für die Vielzahl von Zyklen zu einem Diagramm konsolidiert durch Mittelwertbildung und Komprimierung der Vielzahl von Teilen von Zeitseriendaten für jeden der Zyklen in der Zeitrichtung, und
die Ausgabesteuereinheit (104) so konfiguriert ist, dass sie die Vielzahl von Teilen von Zeitseriendaten für die Vielzahl von Zyklen in einer Vielzahl von Stufen integral ausgibt.

2. Informationsverarbeitungsvorrichtung (100) nach Anspruch 1, die ferner eine Kommunikationssteuereinheit (111) umfasst, die so konfiguriert ist, dass sie Kontextinformationen in Bezug auf den Betrieb des Zielgeräts empfängt,
wobei die Speichereinheit (113) so konfiguriert ist, dass sie die Vielzahl von charakteristischen Informationen in Verbindung mit den Kontextinformationen speichert.

3. Informationsverarbeitungsvorrichtung (100) nach Anspruch 2,
wobei die Ausgabesteuereinheit (104) so konfiguriert ist, dass sie die Kontextinformationen selektiv an die Ausgabeeinheit (115) ausgibt.

4. Informationsverarbeitungsvorrichtung (100) nach Anspruch 2 oder 3, ferner umfassend:
die Ausgabeeinheit (115), die so konfiguriert ist, dass sie unter Steuerung der Ausgabesteuereinheit (104) Informationen ausgibt, wobei die Ausgabeeinheit (115) eine Anzeige ist.

5. System (1), umfassend:
der Informationsverarbeitungsvorrichtung (100) nach Anspruch 1 oder 2; und
ein Zielgerät (200), das von der Informationsverarbeitungsvorrichtung diagnostiziert werden soll, einschließlich:
einen Detektor (225), der so konfiguriert ist, dass er die physikalische Größe des Zielgeräts (200) erfasst, und der so konfiguriert ist, dass er Informationen einschließlich der physikalischen Größe an die Informationsverarbeitungsvorrichtung (100) ausgibt.

6. System (1) nach Anspruch 5,
wobei das Zielgerät (200) ein Bearbeitungsgerät ist, das so konfiguriert ist, dass es eine Bearbeitung an einem Bearbeitungsziel durchführt.

7. System (1) nach Anspruch 5, ferner umfassend:
die Ausgabeeinheit (115), die so konfiguriert ist, dass sie unter der Steuerung der Ausgabesteuereinheit (104) Informationen ausgibt, wobei die Ausgabeeinheit (115) ein Drucker ist.

8. Informationsverarbeitungsverfahren, das von einer Informationsverarbeitungsvorrichtung (100) ausgeführt werden soll, die so konfiguriert ist, dass sie ein Zielgerät (200) diagnostiziert, wobei das Verfahren umfasst:
Erhalten (S102) von Informationen über physikalische Größen, die eine physikalische Größe angeben, die in dem Zielgerät auftritt und sich in Übereinstimmung mit dem Betrieb des Zielgeräts ändert;
Erzeugen (S103) von charakteristischen Informationen, die ein Merkmal der Informationen über physikalische Größen angeben;
Klassifizieren (S104) der charakteristischen Informationen in eine Vielzahl von Stufen, die in einem Zyklus enthalten sind, um so eine Vielzahl von charakteristischen Informationen für jeden Zyklus zu erzeugen, wobei der Zyklus ein Zyklus ist, der die Vielzahl von Stufen enthält und wiederholt von dem Zielgerät ausgeführt werden soll;
Speichern der Vielzahl von charakteristischen Informationen für jeden Zyklus; und
Ausgeben (S107) eines oder mehrerer Teile der Vielzahl von Teilen der charakteristischen Informationen für eine Vielzahl von Zyklen an eine Ausgabeeinheit (115), wobei die Zyklen zu verschiedenen Zeitpunkten ausgeführt werden,
**gekennzeichnet durch**
Konsolidieren der Vielzahl von Teilen charakteristischer Informationen für jede Stufe als eine Vielzahl von Teilen von Zeitseriendaten für die Vielzahl von Zyklen in ein Diagramm durch Mittelwertbildung und Komprimierung der Vielzahl von Teilen von Zeitseriendaten für jeden der Zyklen in der Zeitrichtung, wobei
die Ausgabe die integrale Ausgabe der Vielzahl von Teilen der Zeitseriendaten für die Vielzahl von Zyklen in einer Vielzahl von Stufen umfasst.

9. Computerlesbares Medium, das Programmcode speichert, der, wenn er von der Informationsverarbeitungsvorrichtung nach Anspruch 1 ausgeführt wird, die Vorrichtung veranlasst, das Verfahren nach Anspruch 8 auszuführen.

## Revendications

1. Appareil de traitement d'informations (100) comprenant :
un récepteur d'informations détectées (112) configuré pour obtenir des informations de quantité physique indiquant une quantité physique qui se produit dans un dispositif cible (200) et change en fonction du fonctionnement du dispositif cible ;
un générateur d'informations caractéristiques (102a) configuré pour générer des informations caractéristiques indiquant une caractéristique des informations de quantité physique ;
un gestionnaire de données (103) configuré pour classer les informations caractéristiques en une pluralité d'étapes contenues dans un cycle, de manière à générer une pluralité d'éléments d'informations caractéristiques pour chaque cycle, le cycle étant un cycle comprenant la pluralité d'étapes et devant être exécuté à plusieurs reprises par le dispositif cible ;
une unité de stockage (113) configurée pour stocker la pluralité d'éléments d'informations caractéristiques pour chaque cycle ; et
une unité de commande de sortie (104) configurée pour sortir un ou plusieurs éléments de la pluralité d'éléments d'informations caractéristiques pour une pluralité de cycles, les cycles étant exécutés à différents instants, à une unité de sortie (115),
**caractérisé en ce que**
le gestionnaire de données (103) est configuré pour consolider la pluralité d'éléments d'informations caractéristiques, pour chaque étape, sous la forme d'une pluralité d'éléments de données de séries chronologiques pour la pluralité de cycles dans un graphique en faisant la moyenne et en comprimant la pluralité d'éléments de données de séries chronologiques pour chacun des cycles dans la direction du temps, et
l'unité de commande de sortie (104) est configurée pour sortir intégralement la pluralité d'éléments de données de séries chronologiques pour la pluralité de cycles dans une pluralité d'étapes.

2. Appareil de traitement d'informations (100) selon la revendication 1, comprenant en outre une unité de commande de communication (111) configurée pour recevoir des informations contextuelles liées au fonctionnement du dispositif cible,
dans lequel l'unité de stockage (113) est configurée pour stocker la pluralité d'éléments d'informations caractéristiques en association avec les informations contextuelles.

3. Appareil de traitement d'informations (100) selon la revendication 2,
dans lequel l'unité de commande de sortie (104) est configurée pour émettre sélectivement les informations contextuelles sur l'unité de sortie (115).

4. Appareil de traitement d'informations (100) selon la revendication 2 ou 3, comprenant en outre :
l'unité de sortie (115) est configurée pour émettre des informations sous le contrôle de l'unité de commande de sortie (104), l'unité de sortie (115) étant un affichage.

5. Système (1) comprenant :
l'appareil de traitement d'informations (100) selon la revendication 1 ou 2 ; et
un dispositif cible (200) devant être diagnostiqué par l'appareil de traitement d'informations, comprenant :
un détecteur (225) configuré pour détecter la quantité physique du dispositif cible (200), et est configuré pour transmettre des informations comprenant la quantité physique à l'appareil de traitement d'informations (100).

6. Système (1) selon la revendication 5,
dans lequel le dispositif cible (200) est un dispositif d'usinage configuré pour effectuer un usinage sur une cible d'usinage.

7. Système (1) selon la revendication 5, comprenant en outre :
l'unité de sortie (115) configurée pour émettre des informations sous le contrôle de l'unité de commande de sortie (104), l'unité de sortie (115) étant une imprimante.

8. Procédé de traitement d'informations devant être exécuté par un appareil de traitement d'informations (100) configuré pour diagnostiquer un dispositif cible (200), le procédé comprenant
l'obtention (S102) des informations de quantité physique indiquant une quantité physique qui se produit dans le dispositif cible et change en fonction du fonctionnement du dispositif cible ;
la génération (S103) d'informations caractéristiques indiquant une caractéristique des informations de quantité physique ;
la classification (S104) des informations caractéristiques en une pluralité d'étapes contenues dans un cycle, de manière à générer une pluralité d'éléments d'informations caractéristiques pour chaque cycle, le cycle étant un cycle comprenant la pluralité d'étapes et devant être exécuté de manière répétée par l'appareil cible ;
le stockage de la pluralité d'éléments d'informations caractéristiques pour chaque cycle ; et
la sortie (S107) d'un ou plusieurs éléments de la pluralité d'éléments d'informations caractéristiques pour une pluralité de cycles, les cycles étant exécutés à différents instants, à une unité de sortie (115),
**caractérisé par**
la consolidation de la pluralité d'éléments d'informations caractéristiques, pour chaque étape, sous la forme d'une pluralité d'éléments de données de série chronologique pour la pluralité de cycles dans un graphique en faisant la moyenne et en compressant la pluralité d'éléments de données de série chronologique pour chacun des cycles dans la direction du temps, dans lequel
la sortie comprend la sortie intégrale de la pluralité d'éléments de données de séries chronologiques pour la pluralité de cycles dans une pluralité d'étapes.

9. Support lisible par ordinateur stockant un code de programme qui, lorsqu'il est exécuté par l'appareil de traitement d'informations selon la revendication 1, amène ledit appareil à exécuter le procédé selon la revendication 8.
